**Europäisches Patentamt**

**European Patent Office**

**Office européen des brevets**

(11) Veröffentlichungsnummer: **0 027 229**

**A1**

(12) **EUROPÄISCHE PATENTANMELDUNG**

(21) Anmeldenummer: **80106038.5**

(22) Anmeldetag: **06.10.80**

(51) Int. Cl.³: **G 01 M 9/00**

(30) Priorität: **12.10.79 DE 2941404**

(43) Veröffentlichungstag der Anmeldung:
**22.04.81 Patentblatt 81/16**

(84) Benannte Vertragsstaaten:
**CH FR GB LI NL**

(71) Anmelder: **Deutsche Forschungs -und Versuchsanstalt
für Luft-und Raumfahrt e.V.
Linder Höhe
D-5000 Köln 90(DE)**

(72) Erfinder: **Heddergott, Alfred, Dipl.-Ing.
Kastanienweg 11
D-3400 Göttingen(DE)**

(72) Erfinder: **Wedemeyer, Erich, Dr. rer. nat.
Am Weinberg 37
D-3411 Angerstein(DE)**

(74) Vertreter: **Patentanwälte Dipl.-Ing. Rudolf Bibrach
Dipl.-Ing. Elmar Rehberg
Bibrach und Rehberg Postfach 7 38
D-3400 Göttingen(DE)**

(54) **Messstrecke an Windkanälen.**

(57) Der Erfindung liegt die Aufgabe zugrunde, eine Meßstrecke zur Verwendung an Windkanälen aufzuzeigen, die die Durchführung interferenzfreier dreidimensionaler Messungen ermöglicht.

Erfindungsgemäß wird dies dadurch erreicht, daß die Wandung (1) aus einem Material mit kleinem Elastizitätsmodul und hoher Dehngrenze besteht und auf ihrer Außenseite von einer Vielzahl über Länge und Querschnitt verteilter verstellbarer Abstützungen (5) gehalten ist. Damit ist es möglich, eine interferenzfreie dreidimensionale Windkanalströmung zu erzeugen, so daß die ohnehin unzulänglichen Meßwertkorrekturen entfallen. Die dehnbare flexible Wandung (1) kann von außen verformt werden, so daß die durch die Verdrängungswirkung des Modells, beispielsweise Flugzeugmodells, und durch den Auftrieb abgelenkten Stromlinien nicht an der Wandung der Meßstrecke verfälscht werden.

Fig. 1

## Meßstrecke an Windkanälen

Die Erfindung bezieht sich auf eine Meßstrecke an Windkanälen, mit einer Einrichtung zum Positionieren des Modells und einer das Modell mit Abstand umschließenden verformbaren Wandung.

Derartige Meßstrecken sind bekannt. Sie sind Bestandteil von Windkanälen bzw. in diese eingebaut. Die Wandung besteht aus Metall, Holz oder auch Glasfaserkunststoffen, und ist geringfügig verformbar. Zusätzlich kann die Wandung noch geschlitzt, gelocht oder adaptiv flexibel sein. Derartige adaptiv flexible Wandungen sind jedoch nur im Zusammenhang mit zweidimensionalen Messungen bekannt. In solchen Meßstrecken lassen sich dreidimensionale Messungen interferenzfrei nicht durchführen.

Der Erfindung liegt die Aufgabe zugrunde, eine Meßstrecke zur Verwendung an Windkanälen aufzuzeigen, die die Durchführung interferenzfreier dreidimensionaler Messungen ermöglicht.

Erfindungsgemäß wird dies dadurch erreicht, daß die Wandung der Meßstrecke aus einem Material mit kleinem Elastizitätsmodul und hoher Dehngrenze besteht und auf ihrer Außenseite von einer Vielzahl über Länge und Querschnitt verteilter verstellbarer Abstützungen gehalten ist. Damit wird es möglich, interferenzfrei dreidimensionale Windkanalströmungen zu erzeugen und die dreidimensionalen Messungen

- 2 -

ohne die ohnehin unzulänglichen Messwertkorrekturen durchzuführen. Es ergeben sich zuverlässigere Ergebnisse bei zugleich höheren Reynolszahlen. Die dehnbare flexible Wandung kann so von aussen verformt werden, dass die durch die Verdrängungswirkung des Modells, beispielsweise Flugzeugmodells, und durch den Auftrieb abgelenkten Stromlinien nicht an der Wandung der Meßstrecke verfälscht werden. Die Verformung der nachgiebigen Wandung von aussen kann nach entsprechenden Rechenvorschriften durchgeführt werden.

Die Wandung weist eine für die Aufbringung der erforderlichen Biegesteifigkeit ausreichend grosse Wandstärke auf. Bei gleicher Biegesteifigkeit lässt sich ein Wandmaterial mit kleinem Elastizitätsmodul wesentlich leichter dehnen als z.B. Metallwände. Die Wandungkann aus Gummi, Silikon, stretchartigem Gewebe oder dgl. oder auch aus einer Kombination dieser Materialien bestehen.

Die über die Länge und den Querschnitt der Meßstrecke verteilt angeordneten Abstützungen können aus Hydraulikzylindern, Hubspindeln o.dgl. bestehen, die einzeln oder in Gruppen verstellbar sind. Auch andere Realisierungen der Abstützungen bieten sich an.

Die dehnbare flexible Wandung ist mit Abstand von einer zweiten ortsfest und unnachgiebig ausgebildeten Wandung umgeben, wobei in dem Ringraum zwischen den beiden Wandungen die Hydraulikzylinder, Hubspindeln o.dgl. angeordnet sind. Die zweite äussere Wandung kann durchbrochen ausgebildet sein. Die Hydraulikzylinder, Hubspindeln o.dgl.
sind zweckmässig durch Einschaltung mindestens eines Gelenks mit den beiden Wandungen verbunden. Es ist auch
möglich, dass diese Abstützungen an der äusseren Wandung je nach Erfordernis und gewünschten Kanalquerschnitt verstellbar angeordnet werden können, so dass
sie an unterschiedlichen Stellen bzw. mit unterschiedlicher Kraftrichtwirkung an der inneren, aus Gummi o.dgl.
bestehenden Wandung angreifen können. Die dehnbare
flexible innere Wandung kann insbesondere kreisringförmigen Querschnitt aufweisen.

Selbstverständlich lassen sich aber auch andere verformbare Querschnitte verwirklichen.

Ein Ausführungsbeispiel der Erfindung ist in der Zeichnung dargestellt und wird im folgenden näher beschrieben.
Es zeigen:

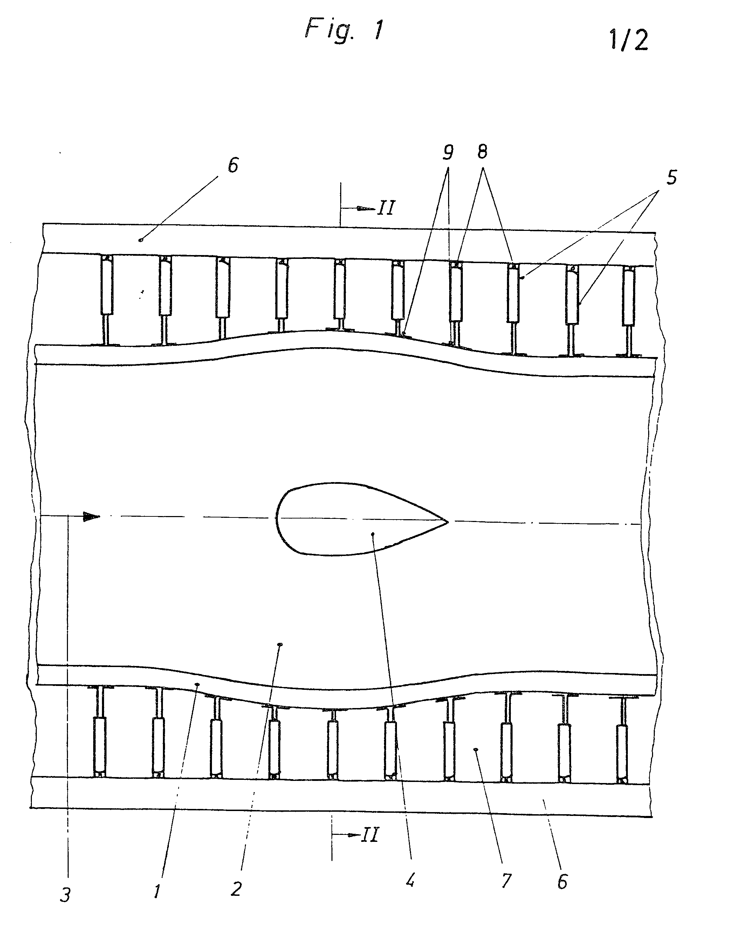

Fig. 1    einen Längsschnitt durch die Meßstrecke
          und
Fig. 2    einen Querschnitt durch die Meßstrecke.

Der wesentliche Bestandteil der Meßstrecke ist die dehnbare flexible Wandung 1, die beispielsweise kreisringförmigen Querschnitt aufweisen kann. Die Wandung 1 besteht aus einem Material mit kleinem Elastitzitätsmodul
und hoher Dehngrenze, beispielsweise Gummi, Silikon,
Stretch o.dgl.

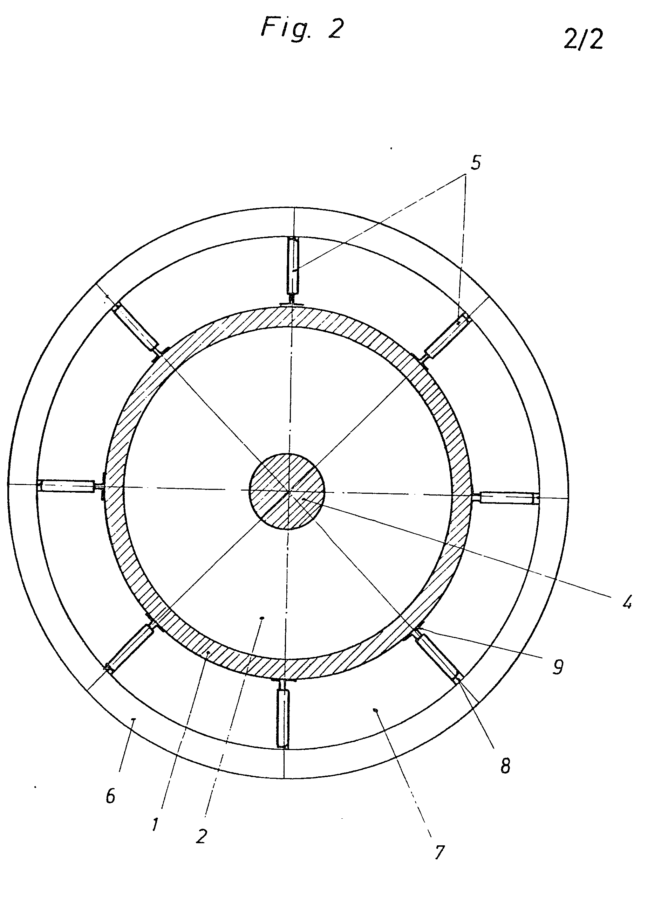

Die Wandung 1 besitzt eine relativ große Wandstärke, um die erforderliche Biegesteifigkeit aufzubringen. Im Innenraum 2 erfolgt die Durchströmung in Richtung des Pfeiles 3. Das Modell 4 ist im Innenraum 2 aufgehängt bzw. aufgestellt und wird von der Strömung des Windkanals umschlossen. Zur Erzeugung interferenzfreier dreidimensionaler Windkanalströmungen ist die Wandung 1 im Bereich des Modells 4 nach außen ausgebaucht eingestellt. Dies geschieht mittels einer Vielzahl von Abstützungen, die als Hydraulikzylinder 5 ausgebildet sind, und die über die Länge der Meßstrecke sowie den Durchmesser (Fig. 2) beispielsweise in regelmäßigen Abständen angeordnet sind.

Die innere Wandung 1 ist von einer äußeren Wandung 6 mit Abstand umgeben, so daß ein Ringraum 7 gebildet ist, in welchem die Hydraulikzylinder 5 angeordnet sind. Die äußere Wandung 6 kann auch durchbrochen ausgebildet sein. Die Hydraulikzylinder 5 sind über Gelenke 8 mit der äußeren Wandung 6 verbunden. Andererseits können Gelenke 9 an den Anlenkstellen der Hydraulikzylinder 5 an der inneren Wandung 1 vorgesehen sein. Die Verformung der dehnbaren elastischen Wandung 1 erfolgt nach entsprechenden Rechenvorschriften, indem die Hydraulikzylinder 5 einzeln oder in Gruppen eingestellt werden. Wie aus Fig. 2 erkennbar ist, kann die Wandung 1 insbesondere kreisringförmigen Querschnitt aufweisen. Aber auch andere Querschnitte sind denkbar.

- 1 -

Patentansprüche:

1. Meßstrecke an Windkanälen, mit einer Einrichtung zum Positionieren des Modells und einer das Modell mit Abstand umschließenden verformbaren Wandung, dadurch gekennzeichnet, daß die Wandung (1) aus einem Material mit kleinem Elastizitätsmodul und hoher Dehngrenze besteht und auf ihrer Außenseite von einer Vielzahl über Länge und Querschnitt verteilter verstellbarer Abstützungen (5) gehalten ist.

2. Meßstrecke an Windkanälen nach Anspruch 1, dadurch gekennzeichnet, daß die Wandung (1) eine für die Aufbringung der erforderlichen Biegesteifigkeit ausreichend große Wandstärke aufweist.

3. Meßstrecke an Windkanälen nach Anspruch 1 und 2, dadurch gekennzeichnet, daß die Wandung (1) aus Gummi, Silikon, stretchartigem Gewebe o. dgl. besteht.

4. Meßstrecke an Windkanälen nach Anspruch 1, dadurch gekennzeichnet, daß die über die Länge und den Querschnitt der Meßstrecke verteilt angeordneten Abstützungen (5) aus Hydraulikzylindern, Hubspindeln o. dgl. bestehen, die einzeln oder in Gruppen verstellbar sind.

5. Meßstrecke an Windkanälen nach Anspruch 1 bis 4, dadurch gekennzeichnet, daß die dehnbare flexible Wandung (1) mit Abstand von einer zweiten ortsfest und unnachgiebig ausgebildeten Wandung (6) umgeben ist, wobei in dem Ringraum (7) zwischen den beiden Wandungen die Hydraulikzylinder, Hubspindeln o.dgl. angeordnet sind.

6. Meßstrecke an Windkanälen nach Anspruch 5, dadurch
gekennzeichnet, dass die Hydraulikzylinder, Hubspindeln
o.dgl. unter Einschaltung mindestens eines Gelenks (8)
bzw. (9) mit den beiden Wandungen (1) und (6) verbunden
sind.

7. Meßstrecke an Windkanälen nach Anspruch 1 bis 6, dadurch gekennzeichnet, dass die dehnbare flexible Wandung
(1) kreisringförmigen Querschnitt aufweist.

0027229

Fig. 1

1/2

*Fig. 2*

0027229

**Europäisches Patentamt**  **EUROPÄISCHER RECHERCHENBERICHT**

Nummer der Anmeldung

EP 80 10 6038

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 2 560 634 (R.S. COLLEY)<br>  * Spalte 1, Zeile 47 - Spalte 3, Zeile 74; Figuren * | 1-7 |
| | DE - A - 2 820 439 (CONSERVATOIRE NATIONAL DES ARTS ET METIERS et al.)<br>  * Anspruch 1; Figuren 1,2 * | 1 |

**KLASSIFIKATION DER ANMELDUNG (Int Cl.³)**

G 01 M 9/00

**RECHERCHIERTE SACHGEBIETE (Int. Cl.³)**

G 01 M 9/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 14-01-1981 | VAN ASSCHE |

EPA form 1503.1  06.78